# EUROPÄISCHE PATENTSCHRIFT

(11) **EP 3 668 696 B1**
(45) Veröffentlichungstag und Bekanntmachung des Hinweises auf die Patenterteilung: **07.01.2026**
(21) Anmeldenummer: 18779554.7
(22) Anmeldetag: 24.08.2018
(51) Int. Cl.: B29C 48/25, B29C 64/209, B29C 64/165, B29C 48/285, B29C 48/92, B29C 64/255, B29C 64/393, B29C 64/314, B29C 64/245, B29C 64/336, B29C 64/321, B29C 48/02, B33Y 10/00, B33Y 30/00, B33Y 50/02

(54) **VORRICHTUNG UND VERFAHREN ZUR HERSTELLUNG EINES BAUTEILS MITTELS 3D-MULTIMATERIALDRUCK UND HERGESTELLTES BAUTEIL**
DEVICE AND METHOD FOR PRODUCING A COMPONENT BY MEANS OF 3D MULTI-MATERIAL PRESSURE AND COMPONENT PRODUCED THEREWITH
DISPOSITIF ET PROCÉDÉ DE FABRICATION D'UN COMPOSANT PAR IMPRESSION MULTIMATÉRIAUX 3D ET COMPOSANT FABRIQUÉ

(30) Priorität: 08.09.2017 DE 102017120750
(43) Veröffentlichungstag der Anmeldung: 24.06.2020
(73) Patentinhaber: Technische Universität Chemnitz, 09111 Chemnitz (DE)
(72) Erfinder: RUDOLPH, Johannes, 04651 Bad Lausick (DE); LORENZ, Fabian, 09126 Chemnitz (DE); WERNER, Ralf, 09117 Chemnitz (DE)
(74) Vertreter: Rumrich, Gabriele
(86) Internationale Anmeldenummer: PCT/DE2018/100733
(87) Internationale Veröffentlichungsnummer: WO 2019/047996

(56) Entgegenhaltungen:
- WO-A1-2014/049159
- WO-A1-2016/075802
- WO-A1-2016/115095
- WO-A1-2016/170030
- DE-A1- 102013 021 091
- DE-A1- 102014 209 519
- US-A1- 2016 325 498
- US-A1- 2017 100 893

## Beschreibung

Die Erfindung betrifft eine Vorrichtung und ein Verfahren zur Herstellung eines Bauteils aus mehreren Materialien mittels 3D-Multimaterialdruck und findet insbesondere für die Herstellung eines gedruckten elektrischen Bauteils, insbesondere eines Elektromotors Anwendung.

Aus der Druckschrift EP 1639871 B1 ist ein Verfahren zur Herstellung eines elektrisch leitfähigen Musters mittels Drucken von einer Metalloxide umfassenden Schicht bekannt. Die Schicht wird dabei als reduzierte Schicht auf ein Applikationssubstrat übertragen. Nach dem Drucken wird das leitfähige Muster zum Metallisieren und Sintern durch Infrarot- oder Mikrowellenbestrahlung erhitzt. Das elektrisch leitfähige Muster ist in Form einer Pastenschicht ausgebildet und wird mittels Siebdrucken, Tampondrucken, Flexodruck, Tiefdruck, Lithodruck, Tintenstrahl- oder Laserausdruckverfahren hergestellt.

In der Druckschrift US 2016/0325498 A1 wird ein 3D-Drucker mit einer zweistufigen Düse beschrieben, der jede Schicht in einem Raster ablegt. Jede Düse besitzt ein einzeln steuerbares Hochgeschwindigkeitsventil, wobei mehreren Düsen unter konstantem Druck ein geschmolzener Kunststoff zugeführt wird.

In der WO2016/115 095 A1 wird offenbart, dass die Materialien, die während des AM-Prozesses verwendet werden, Metalllegierung (en), Photopolymer, Thermoplaste, eutektische Metalle, essbare Materialien, Kautschuke, Modellierung und / oder Metallton, keramische Materialien, pulverförmige Polymere, thermoplastisches Pulver, Keramikpulver, Papier, Metallfolie, Kunststofffolie sein können. Der AM-Prozess kann die Komponente 2 und / oder eine oder mehrere nachfolgende Komponenten basierend auf einem oder mehreren 3D-Computermodellen in einem oder mehreren druckbaren Dateiformaten aufbauen, die aus dem STL-Dateiformat, WRL-Dateiformat, VRML ausgewählt sind, aber nicht darauf beschränkt sind. Möglich sind auch 3MF-Dateiformat, AMF-Dateiformat, ZPR-Dateiformat, FORM-Dateiformat und Gcode-Dateiformat.

Der AM-Prozess kann verwendet werden, um die Komponente 2 für eine oder mehrere der folgenden Anwendungen zu bauen: Herstellungsanwendungen; industrielle Anwendungen; soziokulturelle Anwendungen; und / oder irgendeine Kombination davon. In Ausführungsformen können die Herstellungsanwendungen mit verteilter Fertigung, Massenanpassung, schneller Herstellung, Rapid Prototyping, Forschung, Lebensmittel, medizinischer Anwendung, maßgefertigten medizinischen Güssen und / oder einer beliebigen Kombination davon in Verbindung stehen oder darauf ausgerichtet sein.

Es ist aus dieser Druckschrift weiterhin bekannt, ein Verifizierungs- und Einstellverfahren zum Korrigieren mindestens eines Baufehlers, der in einer durch additive Fertigung aufgebauten Komponente vorhanden ist, vorzusehen, wobei das Verfahren Folgendes umfasst: Extrahieren von digitalen 3D-Geometriedaten der Komponente aus gesammelten digitalen Daten, wobei die gesammelten digitalen Daten auf der aufgebauten Komponente basieren eine Build-Plattform einer additiven Fertigungsvorrichtung, wobei die gesammelten digitalen Daten digitale 2D-Bilder umfassen, die von einer der additiven Fertigungsvorrichtung zugeordneten ersten bildgebenden Vorrichtung und digitalen 3D-Bildern gesammelt werden, die von einer zweiten bildgebenden Vorrichtung gesammelt werden, die der additiven Fertigungsvorrichtung zugeordnet ist; Detektieren mindestens eines Buildfehlers in der auf der Buildplattform aufbauenden Komponente durch Vergleichen der extrahierten digitalen 3D-Geometriedaten mit einem ersten digitalen 3D-Modell der Komponente, wobei eine erste digitale 3D-druckbare Datei der Komponente das erste digitale 3D-Modell von umfasst die Komponente; Erzeugen eines zweiten digitalen 3D-Modells der Komponente basierend auf dem detektierten wenigstens einen Buildfehler, der in der Komponente vorhanden ist, wobei das zweite digitale 3D-Modell den detektierten wenigstens einen Buildfehler, der in der Komponente vorhanden ist, berücksichtigt oder korrigiert; und Bereitstellen einer zweiten digitalen druckbaren 3D-Datei, die den erfassten mindestens einen Erstellungsfehler berücksichtigt oder korrigiert, indem der zeilenweise Code der ersten digitalen druckbaren 3D-Datei geändert wird, um das erzeugte zweite digitale 3D-Modell der Komponente zu integrieren.

Bei dieser Lösung nach dem Stand der Technik werden somit zwar Fehler im Druck erkannt, jedoch erst im nachfolgenden Druckvorgang /Layer behoben.

Die Druckschrift WO 2016/170030 A1 beschreibt ein Verfahren zur Herstellung von 3D Objekten. Die Außenfläche umfasst wenigstens einen Flächenabschnitt, der mittels wenigstens eines additiven Fertigungsverfahrens auf einer planen Basisplatte hergestellt wird. Auf der Basisplatte wird zunächst ein Flächenabschnitt in zweidimensionaler Form produziert. Dabei wird wenigstens ein aushärtbares Polymer oder ein aushärtbares Reaktionsharz aufgetragen mittels des schichtaufbauenden Formgebungsverfahrens zur Erstellung einer ersten Schicht genutzt. Nachfolgend wird eine zweite Schicht auf die erste Schicht mittels des gleichen schichtaufbauenden Formgebungsverfahren aufgetragen. Nach dem Auftragen der einzelnen Schichten erfolgt das Aushärten. Nach dem Aushärten erfolgt ein Ablösen des ausgehärteten Flächenabschnitte von der Basisplatte wobei die Flächenabschnitte dreidimensional geformt und nachfolgend fixiert werden.

Aus der Druckschrift WO 2016/075802 A1 ist eine Vorrichtung mit einem Bewegungssystem bekannt, das so konfiguriert ist, dass es eine Bauplattform mit einer Oberfläche bewegt, wobei die Bewegung durch ein Messsystem in Bezug auf die Positionsinformation der Bauplattform überwacht wird. Die Vorrichtung weist eine Düse für ein Pulvermaterial auf, das mittels einer Bestrahlungseinheit aufgeschmolzen wird. Die Überwachung erfolgt bevorzugt mittels eines Kondensorsystems.

Bei der US 2016/0009 029 A1 wird offenbart, dass durch eine Düse verschiedene thermoplastische Materialien und somit ausschließlich Kunststoffe aufgeschmolzen werden. Dabei kann das Material mittels eines Kolbens ausgebracht werden. In noch anderen Ausführungsformen kann Material in die MMC vorgeschoben werden, wenn der Kolben angehoben wird. Dabei wird beim Anheben des Kolbens ein Vakuum erzeugt. Dieses durch das Anheben des Kolbens verursachte Vakuum soll reduziert werden, um die zum Anheben des Kolbens erforderliche Kraft zu minimieren und jegliches Risiko einer möglichen Verformung der Öffnung zu verringern.

Weiterhin ist es aus dieser Druckschrift bekannt, dass Verbundmaterialien mit einer Matrix aus einem Polymer und mit einem FÜLLSTOFF aus Metall oder Keramik verwendet werden können.

Der 3-D-Druck zur Herstellung eines Bauteils aus sowohl metallischen und keramischen Pasten in einem Druckvorgang ist daraus nicht bekannt.

Es wird in GB 2 521 913 A1 weiterhin ein Wärmetauscher offenbart, der mehrere Leitungen in Form von Kapillarröhrchen mit einem gemeinsamen Zulauf und Ablauf aufweist. Dieser besitzt keine Gitterstruktur durch welche ein Fluid strömen kann und wurde nicht durch ein 3D Druckverfahren hergestellt.

Aus dem Stand der Technik ergeben sich mehrere Probleme bei der Durchführung eines Druckens mittels 3D-Multimaterialdruck.

Vor Druckbeginn muss die Skalierung der Extrusionsmenge festgelegt werden. Aufgrund von Toleranzen der Druck- und Dosiereinheit ist eine exakte Einhaltung der vorgeschriebenen Extrusionsmenge gemäß dem Stand der Technik nicht realisierbar. Dies hat zwangsläufig zur Folge, dass die gedruckten Layer mit zunehmender Bauteilhöhe dazu neigen, mit Druckmaterial überfüllt zu werden. Wird hingegen zu wenig Material eingebracht, nimmt die Häufigkeit von Fehlstellen proportional zur Druckhöhe zu.

Beim Extrusionsdruck können, trotz optimiertem Mischverfahren der Pasten, Fehlstellen entstehen. Bei großen und komplexen Druckkörpern steigt die Wahrscheinlichkeit solcher Ereignisse. Dies bedeutet nach dem Stand der Technik eine Unterbrechung des Druckvorgangs, mit anschließender manueller Korrektur. In ungünstigen Fällen kann dies auch den Abbruch des Druckvorgangs bedeuten. Ist eine manuelle Korrektur möglich, zieht dies einige Probleme beim weiterführen des Druckvorgangs nach sich. Beispielsweise können veränderte Trocknungsparameter und die Neueinrichtung der Druckmaschine, Fehler im weiteren Druckprozess verursachen.

Ein weiteres Problem des Extrusionsdrucks ist die temporäre Verstopfung der Extrusionsdüse. Verstopfungen der Extrusionsdüse lassen sich aufgrund von statistischen Schwankungen der Partikelgröße und Form nicht vollständig ausschließen. Tritt eine Verstopfung auf, muss der Druckprozess unterbrochen werden und das Druckteil kann nicht fertig gestellt werden. Eine manuelle Reinigung der Düse ist für die Fortsetzung des Drucks erforderlich.

Gemäß des Standes der Technik ist die Formbeständigkeit üblicher Binder während des Druckprozesses, die Fließfähigkeit, das Entmischungsverhalten, die Aushärtbarkeit und die Kompatibilität zu einem Sinterprozess nicht gegeben, da teils gegensätzliche physikalische und chemische Eigenschaften des Binders gefordert werden. Binder, die allen Anforderungen des 3D-Multimaterialdrucks gerecht werden, sind von konventionellen Verfahren nicht bekannt. Zudem ist es notwendig, die Bindereigenschaften, in Abhängigkeit der Größe und Form der in der Paste befindlichen Partikel, anzupassen.

Gemäß dem Stand der Technik werden die pastösen und granularen Gebinde mit Hilfe von Druckluft bzw. mechanisch aufgebrachtem Druck gefördert. Nachteilig ist, dass Pasten die über sehr lange Zeiträume, wie es beim 3D-Druck von großen Bauteilen notwendig ist, unter Druck stehen grundsätzlich zu einer Entmischung neigen. Dies gilt besonders für Pasten die Partikel aus Stoffen mit hohen Dichten wie Metall enthalten.

Vor allem bei großen bis sehr großen Druckkörpern muss eine definierte Aushärtung während des Druckprozesses gewährleistet werden, da sonst eine Verformung des Druckkörpers unter seiner eigenen Last zu befürchten ist. Bei bisher angewendeten Verfahren wird dies durch foto- oder wärmehärtende Polymere im Binder gewährleistet. Dies ist aber wegen der speziellen Anforderungen an Binder für den 3D-Multimaterialdruck nicht möglich.

In Bezug auf das Sintern eines Bauteils weist der Stand der Technik Nachteile auf derart, dass Unedle Metalle, wie Kupfer oder Eisen unter Schutzgasatmosphäre bzw. unter der Anwesenheit von Aktivgasen und vor allem unter der Abwesenheit
von Sauerstoff, gesintert werden müssen, da es sonst zu Oxidationsprozessen kommt, die einem optimalen Sinterergebnis entgegenstehen. Unter diesen Bedingungen lassen sich jedoch nicht alle Binderbestanteile aus dem Druckkörper entfernen, was sich negativ auf die angestrebten Eigenschaften des gedruckten Teils auswirkt.

Kupfer und andere Metalle können auf makroskopischen Skalen üblicherweise nicht dauerhaft, wegen der sehr unterschiedlichen Wärmeausdehnungskoeffizienten verbunden werden. Emaille bildet hier eine Ausnahme ist aber zur Herstellung massiver Druckkörper nicht geeignet. Die aus anderen Verfahren bekannten LTCC (Low Temperatur Cofired Ceramics) weisen zwar die erforderlichen Wärmeausdehnungskoeffizienten auf, eignen sich aufgrund von Anisotropien des Ausdehnungskoeffizienten jedoch nicht für den 3D-Multimaterialdruck.

Aufgabe der Erfindung ist es, eine Vorrichtung und ein Verfahren zur Herstellung eines Bauteils mittels 3D-Multimaterialdruck zu entwickeln, welches einen einfachen konstruktiven Aufbau aufweist und die genannten Defizite des Standes der Technik behebt.

Diese Aufgabe wird mit den kennzeichnenden Merkmalen des 1. und 7. Patentanspruchs gelöst.

Vorteilhafte Ausgestaltungen ergeben sich aus den Unteransprüchen.

Die Erfindung betrifft ein Verfahren zur Herstellung eines Bauteils mittels 3D-Multimaterialdruck, insbesondere zur Herstellung eines elektrischen Bauteils, wobei mittels eines Extrusionsverfahrens metallische und keramische Pasten schichtweise mittels einer Extrusionsdüse aufgetragen und in Form gebracht werden. Dabei werden mehrere Parameter während des Druckprozesses mittels einer Überwachungseinrichtung überwacht.

Mittels einer Überwachungseinrichtung in Form einer Kamera werden Fehlstellen im Druck erkannt, lokalisiert und mit den Messungen einer kontinuierlichen Überwachung verglichen, wobei basierend auf erkannten Fehlstellen automatisch neue Extrusionswege erstellt werden, die die Fehlstellen vollautomatisch beheben.

Des Weiteren erfolgt mit der selben oder einer weiteren Kamera eine Überwachung einer Über- oder Unterfüllung jeder gedruckten Schicht in Bezug auf die Extrusionsmenge, wobei mit Hilfe von bildgebenden Verfahren der Füllgrad jeder gedruckten Schicht während des Druckprozesses erfasst und ausgewertet wird.

In einem dritten Überwachungsprozess werden vorteilhafter Weise mittels der Überwachung des Drucks im Bereich der Extrusionsdüse temporäre Verstopfungen in der Extrusionsdüse erkannt, wobei bevorzugt die Verstopfung außerhalb des gedruckten Körpers durch Erhöhung des Drucks gelöst und anschließend der Druckprozess fortgeführt wird. Eine vorteilhafte mögliche Maßnahme ist die Unterbrechung des Druckvorgangs mit anschließendem Verfahren des Druckkopfes in einen Bereich außerhalb des gedruckten Körpers. In diesem Bereich wird eine definierte Menge Extrusionsmaterials unter erhöhtem Druck ausgepresst, bis sich die Verstopfung löst. Dieser Vorgang wird vorteilhafter Weise vollautomatisch durchgeführt.

Zur Überwachung von Fehlstellen im Druck, wird erfindungsgemäß während des Druckvorgangs eine auf dem Druckkörper abgelegte Raupe mit Hilfe der Kamera und Bilderkennungs- und Auswerteverfahren beurteilt und im Falle von Fehlstellen diese vor der nächsten Schicht und/oder dem nächsten Material behoben. Erst wenn die Fehlstellen behoben wurden, wird mit dem Druck des nächsten Materials beziehungsweise des folgenden Layers fortgefahren. Bei Erkennung einer Fehlstelle wird deren Lokalisation und Ausdehnung erkannt und gespeichert. Basierend auf erkannten Fehlstellen werden folgend automatisch neue Extrusionswege erstellt, wodurch die Fehlstellen vollautomatisch behoben werden.

Des Weiteren wird nach der Fertigstellung eines Materials in einer Schicht der entsprechende Bereich mit Hilfe der bildgebenden Verfahren erfasst und der Verlauf der Extrusionswege anhand eines Bilderkennungsverfahrens ermittelt.

Zur Überwachung der Über-/Unterfüllung der Extrusionsmenge, wird in einer vorteilhaften Ausgestaltung mittels der dynamischen Anpassung eines Skalierungsfaktors in Form einer Regelschleife an den Druckprozess, der Über- beziehungsweise Unterfüllung entgegengewirkt.

Das Lösen der Verstopfung in der Extrusionsdüse wird vorzugsweise mittels Abfallen des gemessenen Drucks detektiert, wobei im Anschluss der Druckprozess automatisch fortgesetzt wird. Sollte die Verstopfung durch die Druckerhöhung nicht zu Beheben sein, wird dies dem Benutzer durch Ausgabe einer Fehlermeldung angezeigt. Die Düse muss dann manuell gereinigt werden, wobei anschließend eine vollautomatische Einrichtung des Druckkopfes und die Fortsetzung des Druckvorgangs erfolgt.

Verfahrensgemäß findet ein besonderer Binder in Form einer Emulsion aus mehreren Komponenten Anwendung, wobei mittels der Emulsion eine gezielte Einstellung der Binderparameter erfolgt. Der Binder besteht vorzugsweise aus Polymeren unterschiedlicher Kettenlänge, ringförmigen Kohlenwasserstoffverbindungen, iso-Parafinen, Olefinen, n-Parafinen, Emulgatoren, oberflächenaktiven Substanzen oder Entschäumern oder einer Kombination wenigstens zweier dieser Komponenten.

Nach dem erfolgten Druck des Bauteils erfolgt vorteilhafter Weise ein Sintervorgang der gedruckten Teile. Das Temperaturniveau und die Sinteratmosphäre werden derart gewählt, dass die Binderanteile mittels Oxidation in der sauerstoffhaltigen Atmosphäre aus dem Bauteil ausgetrieben werden, wobei folgend die Temperatur auf 900 - 1500 °C erhöht wird, wodurch die oxidierten metallischen Bestandteile des gedruckten Bauteils mit Hilfe von Aktivgasen reduziert werden. Das Sintern kann sowohl mittels Aktivgas als auch unter Einsatz von Schutzgas erfolgen, wobei unter Aktivgas die Oxidschichten entfernt werden.

Verfahrensgemäß findet eine automatischen Misch- und Zuführeinrichtung Anwendung, wobei die metallische beziehungsweise keramische Paste in der Misch- und Zuführeinrichtung unter Vakuum gemischt und dem Druckkopf mittels Schwerkraft und Vibration zugeführt wird.

Durch die Vibrationsbewegung ändert sich die Viskosität der Paste, so dass diese den Mischbehälter, der Schwerkraft folgend, nach unten durch eine konische Form, die eine Öffnung enthält, in einen Transportschlauch verlassen kann.

Das Pulver wird durch Wirken der Schwerkraft und Vibrationsbewegungen in den Mischbehälter gefördert. Die Portionierung erfolgt über eine variable Einlassöffnung. Aus der Amplitude, Frequenz, Pulverbeschaffenheit und dem Durchmesser der Einlassöffnung lässt sich die zum Mischen bereitgestellt Menge vorzugsweise rechnerisch mit Hilfe von Bewegungsmodellen ermitteln.

Der dazu gemischte Binder liegt dabei in flüssiger Form mit definierter Viskosität vor und kann mittels konventioneller Vorrichtungen dosiert und in den Mischbehälter gefördert werden. In dem Mischbehälter herrscht vorzugsweise ein Vakuum vor, damit eine kontinuierliche Entlüftung der Paste erfolgen kann.

In einer vorteilhaften Ausgestaltung werden mittels Beimengung von Zuschlagstoffen in die Keramikpaste die Schrumpfungswerte während der Trocknung und des Sinterprozesses, sowie die physikalischen Eigenschaften des Druckkörpers eingestellt.

Des Weiteren betrifft die Erfindung eine Vorrichtung zur Herstellung eines Bauteils mittels 3D-Multimaterialdruck, wobei mittels eines Extrusionsverfahrens metallische und keramische Pasten schichtweise mittels einer Extrusionsdüse aufgetragen und in Form gebracht werden. Die Vorrichtung weist eine Misch- und Zuführeinrichtung und/oder eine Bauplattform auf, wobei die Misch- und Zuführeinrichtung einen unter Vakuum stehenden Mischbehälter aufweist und mit einer Vibrationseinrichtung derart verbunden ist, dass der Mischbehälter zum Schwingen anregbar ist, wobei die Paste mittels der Schwingungen in Richtung der Extrusionsdüse transportierbar ist. In dem Mischbehälter herrscht vorzugsweise ein Vakuum vor, damit eine kontinuierliche Entlüftung der Paste erfolgen kann.

Der Mischbehälter enthält ein Rührwerk und weist am unteren Ende eine konische Form auf. Die Mischung der keramischen und metallischen Pasten im Mischbehälter erfolgt mittels des Rührwerks, wobei der Mischbehälter eine variable Einlassöffnung für die Zuführung eines Pulvers sowie eine Zuführung für einen Binder aufweist.

Der Mischbehälter ist vorzugsweise mechanisch mit einer Vibrationseinrichtung verbunden derart, dass dieser mit variabel einstellbarer Frequenz zum Schwingen angeregt werden kann.

Durch die Vibrationsbewegung ändert sich die Viskosität der Paste, so dass diese den Mischbehälter, der Schwerkraft folgend, nach unten durch die konische Form, die eine Öffnung enthält, in einen Transportschlauch verlassen kann.

Der Transportschlauch ist vorzugsweise flexibel, um eine mechanische Verbindung zum Druckkopf zu gewährleisten.

Um den durch Vibration hervorgerufenen Transport der Paste zu gewährleisten, ist der Transportschlauch vorzugsweise in definierten Abständen mit weiteren kleineren Vibrationseinrichtungen versehen.

Des Weiteren weist die Vorrichtung die Bauplattform in Form einer keramischen Bauplattform auf, wobei die Bauplattform eine poröse Struktur aufweist derart, dass dem Bauteil gezielt Feuchtigkeit zuführbar oder entziehbar ist. Dadurch lässt sich die Aushärtung während des Druckprozesses gezielt beeinflussen.

Die Bauplattform besitzt eine intrinsische Struktur, wobei diese von Luft und/oder Lösungsmittel durchströmbar ist.

Die verwendete keramische Paste besteht vorzugsweise aus Silikatkeramiken. Alternativ ist den Silikatkeramiken Glaspulver beigemengt.

Des Weiteren wird ein Bauteil beschrieben, welches mittels des erfindungsgemäßen Verfahrens und der erfindungsgemäßen Vorrichtung hergestellt ist, wobei das Bauteil eine Gitterstruktur aufweist. In einer vorteilhaften Ausgestaltung ist das Bauteil in Form eines Wärmetauschers ausgebildet. Mit der erfindungsgemäßen Lösung ist es möglich, in einem 3D-Druckvorgang nacheinander metallische Pasten und keramische Pasten zu Drucken und dadurch ein Bauteil aus metallischen und keramischen Bereichen/Komponenten herzustellen.

Dabei wird eine hohe Qualität des Bauteils sichergestellt, da durch die Überwachungseinrichtung Fehlstellen beim Drucken einer Lage erkannt und in dieser Lage behoben werden können und/oder in einer Schicht die Über- bzw. Unterfüllung durch Erfassung des Füllgrades während des Druckens der Schicht erfasst wird und/oderdurch eine Überwachung des Drucks im Bereich der Extrusionsdüse Verstopfungen der Extrusionsdüse erkannt und durch Druckerhöhung gelöst werden können. Jede einzelne dieser Maßnahme der Überwachungseinrichtung führt bereits zu einer höheren Zuverlässigkeit des 3D-Druckprozesses und einer Verbesserung der Bauteilqualität.

Durch die Mischung der Pasten und des Binders in einem Mischbehälter unter Vakuum wird eine Entlüftung der Paste erzielt, durch welche ebenfalls die Druckqualität und somit die Qualität des Bauteils verbessert wird, da Lufteinschlüsse in den gedruckten Keramik- und Metallpasten vermieden werden. Durch die zusätzliche Beaufschlagung des Mischbehälters mit Schwingungen wird der Transport der Paste zur Extrusionsdüse begünstigt.

Vorzugsweise wird die metallische Paste und die keramische Paste in jeweils einem Separaten Mischbehälter aus dem entsprechenden Pulver und Binder gemischt und dem jeweiligen Extruder zugeführt. Bevorzugt wird somit für jedes zu druckende Material ein separater Mischbehälter und ein separater Extruder verwendet.

Wird bei der Vorrichtung eine Bauplattform mit einer porösen Struktur verwendet, kann dem Bauteil gezielt Feuchtigkeit zugeführt oder entzogen werden, wodurch die Trocknung des Bauteils beeinflusst werden kann.

Die bei einem Wärmetauscher übereinander angeordneten Raupen werden mit einem definierten Abstand zueinander abgelegt. Dadurch ist es möglich, dass das jeweilige Fluid durch die Gitterstruktur strömen kann.

Die Erfindung wird nachfolgend an einem Ausführungsbeispiel und zugehörigen Zeichnungen näher erläutert.

Es zeigen:
- Figur 1: eine erfindungsgemäße Misch- und Zuführeinrichtung,
- Figur 2: eine erfindungsgemäße poröse keramische Bauplattform,
- Figur 3: einen mit 3D-Multimaterialdruck hergestellten Wärmetauscher in einer Schnittdarstellung,
- Figur 4: einen mittels 3D-Druck hergestellten Wärmetauscher,
- Figur 5: einen Wärmetauscher mit einer "Rohr in Rohr" Anordnung.

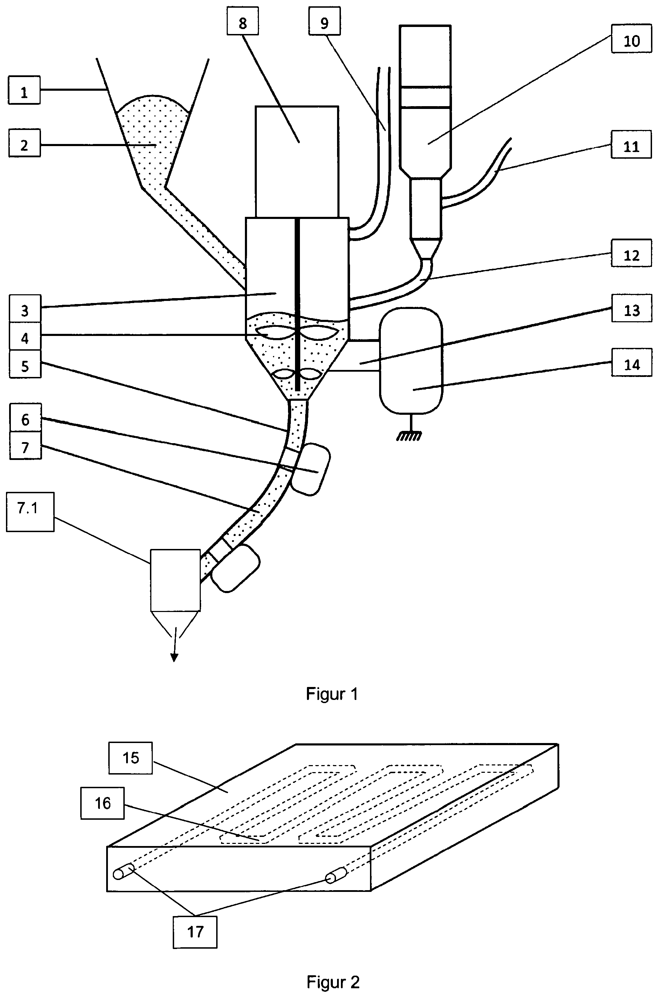

Figur 1 zeigt eine automatische und kontinuierliche Misch- und Zuführeinrichtung für Pasten des 3D-Multimaterialdrucks. Ein in einem Vorratsbehälter 1 angeordnetes Pulver 2 aus Metall oder Keramik wird einem Mischbehälter 3 mit einem darin konzentrisch angeordneten Rührwerk 4 zugeführt. Der Mischbehälter 3 weist an seinem unteren Ende eine konische Form auf, an der sich ein Transportschlauch 5 zum Druckkopf anschließt. Der Transportschlauch 5 ist flexibel ausgebildet und weist in definierten Abständen Vibrationseinheiten 6 auf, welche die fertig gemischte Paste 7 mittels Vibrationen und dem Wirken der Schwerkraft in Richtung des Druckkopfes fördern.

Der Mischbehälter 3 weist einen Antriebsmotor 8 für das in dem Mischbehälter 3 angeordnete Rührwerk 4 auf. Da der Mischbehälter unter Vakuum steht, ist ein Anschlussschlauch 9 befestigt, der mit einer Unterdruckpumpe verbunden ist. Das so erzeugte Vakuum bewirkt eine kontinuierliche Entlüftung der in dem Mischbehälter 3 befindlichen Paste.

Über eine weitere Zuführung ist eine Dosier- und Fördereinrichtung 10 mit dem Mischbehälter 3 verbunden, welche den Binder, beziehungsweise die einzelnen Komponenten des Binders beinhaltet. Die Dosier- und Fördereinrichtung weist einen weiteren Anschluss für einen Verbindungsschlauch 11 auf, der zu einem Vorratsbehälter für den Binder führt. Mittels eines Verbindungsschlauchs 12 wird die Dosier- und Fördereinrichtung 10 mit dem Mischbehälter 3 verbunden. Der Binder wird über diese Verbindung in den Mischbehälter 3 zugeführt.

Die Förderung der Pasten erfolgt mittels Vibration und Schwerkraft. Der Mischbehälter ist vorzugsweise mittels einer mechanischen Verbindung 13 mit einer Vibrationseinrichtung 14 verbunden derart, dass dieser mit variabel einstellbarer Frequenz zum Schwingen angeregt werden kann.

Durch die Vibrationsbewegung ändert sich die Viskosität der Paste, so dass diese den Mischbehälter 3, der Schwerkraft folgend, nach unten durch die konische Form, die eine Öffnung enthält, in den Transportschlauch 5 verlassen kann.

Für den 3D-Multimaterialdruck weist die Vorrichtung bevorzugt für die Mischung jeder zu druckenden Paste einen separaten Mischbehälter 3 auf. Dabei werden mindestens eine keramische und mindestens eine metallische Paste in jeweils einem separaten Mischbehälter 3 aus Pulver und Binder gemischt und daraus über den Transportschlauch 5 und einen Extruder 7.1 der nicht separat bezeichneten Extrusionsdüse 7.1 zugeführt und somit in einem Druckvorgang das Bauteil hergestellt.

Figur 2 zeigt eine schematische Darstellung einer porösen keramischen Bauplattform, welche erfindungsgemäß in der Vorrichtung Anwendung findet. Die Bauplattform 15 weist eine poröse intrinsische Struktur 16 auf derart, dass dem Bauteil gezielt Feuchtigkeit zuführbar oder entziehbar ist. Dadurch lässt sich die Aushärtung während des Druckprozesses gezielt beeinflussen.

Die Bauplattform 15 weist Anschlüsse 17 auf, mittels derer die Bauplattform 15 von Luft und/oder Lösungsmittel durchströmbar ist. Mittels der Anschlüsse 17 ist die Luft und/oder das Lösungsmittel zu- oder abführbar.

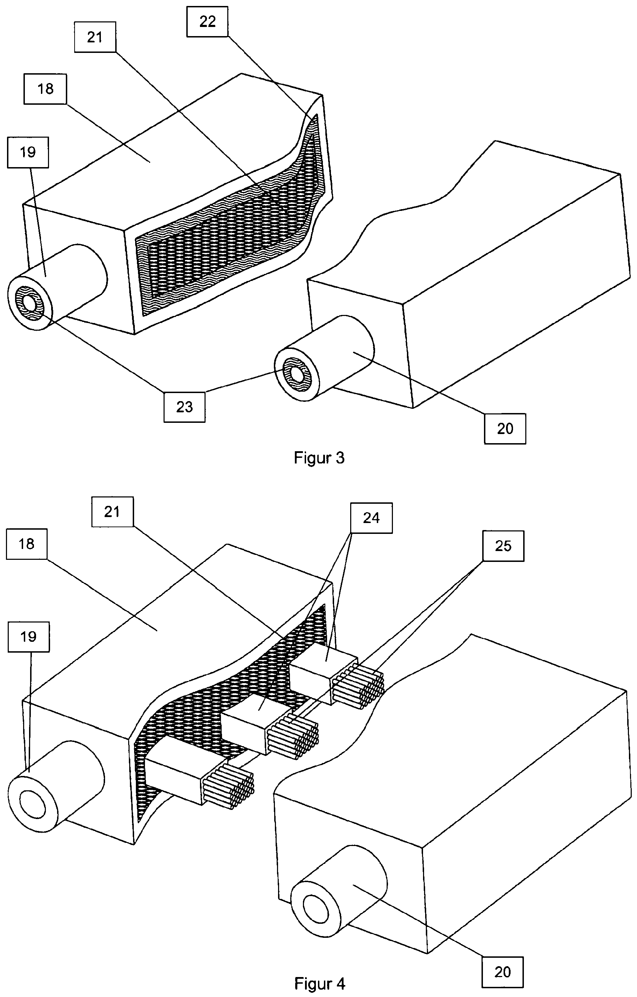

In den Figuren 3 bis 5 sind verschiedene Ausbildungsformen eines, mittels 3D-Multimaterialdrucks hergestellten Wärmetauschers dargestellt.

Prinzipiell sind die in den Figuren 3 bis 5 dargestellten Wärmetauscher in deren äußerer Form mit Standardwärmetauschern vergleichbar.

Der Wärmetauscher wird vollständig 3D-gedruckt, wobei auch innere Struktur und unterschiedliche Materialien mittels des Drucks umsetzbar sind. Der Wärmetauscher besteht aus einem Gehäuse 18, welches je nach Bedarf mit Aufnahmevorrichtungen für zum Beispiel Leistungselektronik versehen ist. Des Weiteren weist der Wärmetauscher an seiner Stirnseite wenigstens zwei Anschlüsse in Form eines Zuflusses 19 und eines Abflusses 20 auf. Im Inneren des Gehäuses 18 ist eine innere Struktur in Form einer innenliegenden Gitterstruktur 21 zum Übertragen der Wärme vom Gehäuse 18 auf das Kühlfluid angeordnet.

Gemäß Figur 3 ist zwischen der Gitterstruktur 21 und dem Gehäuse 18 des Wärmetauschers eine zusätzliche Isolationsschicht 22 angeordnet, wobei die Isolationsschicht 22 aus einem anderweitigen Material bestehen kann. Dieses Material kann beispielsweise Edelstahl sein, wobei eine chemische Isolation von dem Gehäuse (z.B. Kupfer) gegen das durchströmende Fluid oder Keramik als elektrische Isolation des durchströmenden Fluids gegen das Gehäuse eingesetzt wird. Auch die Anschlüsse in Form von Zufluss und Abfluss können eine zusätzliche Isolationsschicht 23 aufweisen.

Gemäß Figur 4 weisen die Heizelemente 25 des Wärmetauschers eine keramische Isolation 24 von der inneren Gitterstruktur 21 auf. Dies ermöglicht beispielsweise den Druck eines Durchlauferhitzers mit einer hohen Leistungsdichte. Die Heizelemente 25 sind derart angeordnet, dass sie gegeneinander und gegen das Fluid durch die keramische Isolationsschicht 24 isoliert sind.

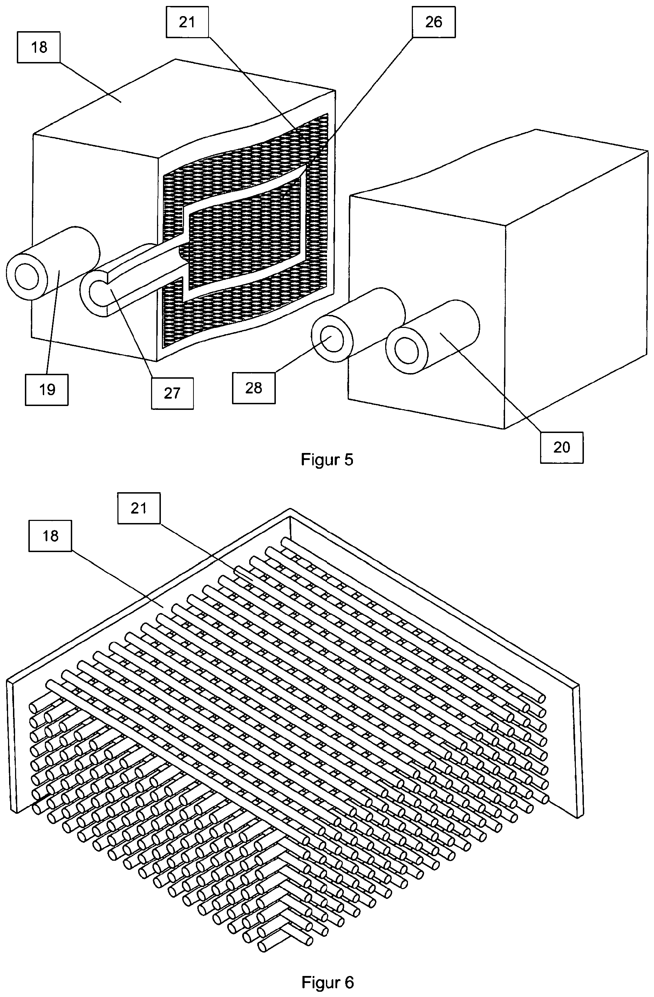

Ein mit Hilfe des 3D-Multimaterialdrucks hergestellter Wärmetauscher mit intrinsischer Gitterstruktur ist in Figur 5 dargestellt. Im Inneren ist eine zweite Fluid führende Struktur 26 ausgebildet. Die zweite Struktur 26 weist einen zweiten Zufluss 27 und einen zweiten Abfluss 28 auf, wobei der Zu- und Abfluss 27, 28 als Einströmöffnung und Ausströmöffnung für den inneren Fluidkreislauf dienen. Somit sind Wärmetauscher mit hoher Leistungsdichte für hermetisch getrennte Systeme, als auch mehrere innere Rohre denkbar um die Oberfläche zu vergrößern.

Figur 6 zeigt eine Detailansicht einer in einem Gehäuse 18 angeordneten Gitterstruktur 21, die vollständig mit Gehäuse 18 gedruckt wurde.

Nach dem Druck erfolgt Wärmebehandlung zum Aushärten in Form von Sintern, wobei der Binder vollständig ausgetrieben wird.

Die innere Struktur zum Übertragen der Wärme vom Gehäuse auf das Kühlfluid unterscheidet sich dabei grundlegend vom bekannten Stand der Technik.

Stand der Technik sind röhrenartige Strukturen deren Querschnitt auch von der runden Form abweichen kann.

Die innere Gitterstruktur des gedruckten Wärmetauschers entsteht durch Extrusion von keramischen oder metallischen Pasten, wobei in der jeweiligen Ebene Raupen mit einem definierten Abstand zueinander abgelegt werden.

In der darüber liegenden Ebene werden ebenfalls Raupen durch Extrusion abgelegt, wobei diese sich in ihrer Ausrichtung zu den darunter liegenden Raupen unterscheiden und einen definierten Abstand zu ihren benachbarten Raupen in der Ebene aufweisen. Der Winkel zwischen den Ausrichtungsachsen übereinander liegender Raupen kann dabei variieren. Die Ausrichtung der Raupen alterniert von Ebene zu Ebene, wodurch eine gitterartige Struktur wie in Figur 6 dargestellt entsteht.

Da das Gitter und Gehäuse aus demselben Material z.B. Kupfer und mit demselben Verfahren (3D-Multimaterialdruck) hergestellt sind, entsteht eine stoffschlüssige Verbindung zwischen der Gitterstruktur, die die Wärme an das Kühlfluid und an das Gehäuse überträgt. Das Gehäuse nimmt dabei die Wärme von z.B. Leistungselektronik auf. Daraus resultiert ein besserer Wärmeübergang da deutlich geringere Wärmeübergangswiderstände vorliegen.

Dies führt zu einer deutlichen Erhöhung der Leistungsdichte. Bei geometrischen Einschränkungen kann zudem bei gleicher abzuführender Leistung der Wärmetauscher bzw. Kühlkörper kleiner dimensioniert werden.

Die mit dem erfindungsgemäßen Verfahren hergestellte Gitterstruktur lässt sich nur mit 3D-Multimaterialdruck (Extrusionsdruck) herstellen, da ab einem gewissen Grad der Strukturfeinheit in Abhängigkeit der verbleibenden Öffnung, das verbleibende Pulver bei Verfahren gemäß des Standes der Technik (Pulverbettverfahren- Laserschmelzen und Lasersintern) nicht mehr entfernt werden kann.

Durch die Gitterstruktur kann ein Optimum in Bezug auf das Verhältnis zwischen Oberfläche, über die Wärme ausgetauscht werden kann, und Volumen, das von Fluid durchströmt wird erreicht werden. Gleichzeitig kann Gehäuse materialsparend ausgeführt werden. Somit lassen sich Gitterstrukturen mit 3D-Multimaterialdruck sehr leicht, schnell und Material sparend herstellen.

Ein besonderer Vorteil des gedruckten Wärmetauschers ist die äußere Form sowie die innere Struktur des Wärmetauschers, welche praktisch beliebig ausgeführt werden kann. Dadurch ist eine Integration in eine Umgebung mit ungünstigen Platzverhältnissen möglich.

Ein weiterer Vorteil des Einsatzes des 3D-Multimaterialdruckverfahrens ist die Möglichkeit, mehr als ein Material einzusetzen. Durch Einsatz mehrerer Materialien ergibt sich somit ein breites Anwendungsfeld.

Verfahrensgemäß müssen das Gehäuse der Gitterstruktur, die Gitterstruktur selbst und das äußere Gehäuse nicht aus dem gleichen Material bestehen. So kann zum Beispiel das Gitter aus Kupfer und das Gittergehäuse aus Keramik bestehen. Das Außengehäuse kann zum Beispiel aus Edelstahl bestehen.

Vorteilhafter Weise kann die innere Gitterstruktur gedruckte keramisch isolierte elektrische Leiter enthalten, die als Heizelement dienen, wie in Figur 4 dargestellt. Des Weiteren kann die innere Gitterstruktur eine Struktur enthalten die ebenfalls ein Fluid aufnehmen kann. Diese Struktur enthält ebenfalls eine Gitterstruktur in ihrem Inneren. Eine solche "Rohr in Rohr" - Variante ist in Figur 5 dargestellt. Es ist auch eine Kombination der verschiedenen Ausführungsformen aus den Figuren 3 bis 5 denkbar.

### Bezugszeichenliste

- 1: Vorratsbehälter
- 2: Pulver
- 3: Mischbehälter
- 4: Rührwerk
- 5: Transportschlauch
- 6: Vibrationseinheit
- 7: Fertig gemischte Paste
- 7.1: Extruder
- 8: Antriebsmotor
- 9: Anschlussschlauch
- 10: Dosier- und Fördereinrichtung für den Binder
- 11: Verbindungsschlauch zum Vorratsbehälter für Binder
- 12: Verbindungsschlauch von Dosier- und Mischeinheit des Binders
- 13: Mechanische Verbindung von Vibrationseinheit und Mischbehälter
- 14: Vibrationseinheit für Mischbehälter
- 15: Bauplattform
- 16: Intrinsische Struktur
- 17: Anschlüsse für Lösungsmittel und/oder Luft
- 18: Gehäuse
- 19: Zufluss
- 20: Abfluss
- 21: Innenliegende Gitterstruktur
- 22: Isolationsschicht
- 23: Isolationsschicht Zufluss/Abfluss
- 24: Keramische Isolationsschicht
- 25: Heizelement
- 26: Zweite Gitterstruktur
- 27: Zweiter Zufluss
- 28: Zweiter Abfluss

## Patentansprüche

1. Verfahren zur Herstellung eines Bauteils mittels 3D-Multimaterialdruck, insbesondere zur Herstellung eines elektrischen Bauteils, wobei mittels eines Extrusionsverfahrens aus Pulver (2) und Binder gemischte metallische und keramische Pasten (7) zur Erzeugung des Bauteils schichtweise mittels einer Extrusionsdüse aufgetragen und in Form gebracht werden und nach dem erfolgten Druck des Bauteils ein Sintervorgang erfolgt, wobei der Druckprozess mittels einer Überwachungseinrichtung derart überwacht wird, dass mittels einer Kamera Fehlstellen im Druck erkannt, lokalisiert und mit den Messungen einer kontinuierlichen Überwachung verglichen werden, wobei basierend auf erkannten Fehlstellen automatisch neue Extrusionswege erstellt werden, die die Fehlstellen vollautomatisch beheben und mittels einer Kamera eine Über- oder Unterfüllung jeder gedruckten Schicht in Bezug auf die Extrusionsmenge überwacht wird, wobei mit Hilfe von bildgebenden Verfahren der Füllgrad jeder gedruckten Schicht während des Druckprozesses erfasst und ausgewertet wird und eine während des Druckvorgangs auf dem Druckkörper abgelegte Raupe mit Hilfe der Kamera und Bilderkennungs- und Auswerteverfahren beurteilt wird, **dadurch gekennzeichnet, dass** im Falle von Fehlstellen diese vor der nächsten Schicht behoben werden und dass erst nach dem Beheben der Fehlstellen mit dem Druck des folgenden Layers fortgefahren wird und bei Erkennung einer Fehlstelle deren Lokalisation und Ausdehnung erkannt und gespeichert wird und basierend auf erkannten Fehlstellen folgend automatisch neue Extrusionswege erstellt und dadurch die Fehlstellen vollautomatisch behoben werden.

2. Verfahren nach Anspruch 1, **dadurch gekennzeichnet, dass** der Binder aus einer Emulsion aus mehreren Komponenten besteht wobei der Binder aus Polymeren unterschiedlicher Kettenlänge, ringförmigen Kohlenwasserstoffverbindungen, iso-Parafinen, Olefinen, n-Parafinen, Polysaccharide, oberflächenaktiven Substanzen oder Entschäumern oder einer Kombination wenigstens zweier dieser Komponenten besteht und mittels der Emulsion eine Einstellung der Binderparameter erfolgt,

3. Verfahren nach Anspruch 1 oder 2, **dadurch gekennzeichnet, dass** nach dem erfolgten Druck des Bauteils ein Sintervorgang der gedruckten Teile erfolgt, wobei das Temperaturniveau und die Sinteratmosphäre derart gewählt wird, dass die Binderanteile mittels Oxidation aus dem Bauteil ausgetrieben werden, wobei folgend die Temperatur auf 900 - 1500 °C erhöht wird, wodurch die oxidierten metallischen Bestandteile des gedruckten Bauteils mit Hilfe von Aktivgasen reduziert werden.

4. Verfahren nach einem der Ansprüche 1 bis 3, **dadurch gekennzeichnet, dass** mittels einer automatischen Misch- und Zuführeinrichtung die metallische und keramische Paste (7) unter Vakuum gemischt und dem Druckkopf mittels Schwerkraft und Vibration zugeführt wird.

5. Verfahren nach Anspruch 4, **dadurch gekennzeichnet, dass** die Misch- und Zuführeinrichtung eine Einlassöffnung aufweist, wobei aus Amplitude, Frequenz, Pulverbeschaffenheit und Durchmesser der Einlassöffnung die zum Mischen bereitgestellt Menge ermittelt wird.

6. Verfahren nach einem der Ansprüche 1 bis 5, **dadurch gekennzeichnet, dass** mittels Beimengung von Zuschlagstoffen in die Keramikpaste der Schrumpfungswert während der Trocknung und des Sinterprozesses, sowie die physikalischen Eigenschaften des Druckkörpers eingestellt werden.

7. Vorrichtung zur Herstellung eines Bauteils mittels 3D-Multimaterialdruck, wobei mittels eines Extrusionsverfahrens aus Pulver (2) und Binder gemischte metallische und keramische Pasten (7) zur Erzeugung des Bauteils schichtweise mittels einer Extrusionsdüse auftragbar und in Form bringbar sind, aufweisend eine Überwachungseinrichtung zur Durchführung des Verfahrens nach einem der Ansprüche 1 bis 6, **dadurch gekennzeichnet, dass** die Überwachungseinrichtung
o eine, Fehlstellen im Druck erkennende, lokalisierende und mit den Messungen einer kontinuierlichen Überwachung vergleichende, Kamera aufweist
und
∘
o eine Über- oder Unterfüllung jeder gedruckten Schicht in Bezug auf die Extrusionsmenge überwachende Kamera aufweist, und mit einem bildgebenden Verfahren der Füllgrad jeder gedruckten Schicht während des Druckprozesses erfassbar und auswertbar ist.

8. Vorrichtung nach Anspruch 7, **dadurch gekennzeichnet, dass** die Vorrichtung eine Bauplattform (15) aufweist und die Bauplattform (15) in Form einer keramischen Bauplattform ausgebildet ist, wobei die Bauplattform (15) eine poröse Struktur aufweist derart, dass dem Bauteil gezielt Feuchtigkeit zuführbar oder entziehbar ist.

9. Vorrichtung nach Anspruch 7, **dadurch gekennzeichnet, dass** die Überwachungseinrichtung Mittel zur Überwachung eines Drucks zur Erkennung temporärer Verstopfungen im Bereich der Extrusionsdüse aufweist und dass die Verstopfung außerhalb des gedruckten Körpers durch Erhöhung des Drucks lösbar und der Druckprozess fortführbar ist,

10. Vorrichtung nach einem der Ansprüche Anspruch 7 bis 9, **dadurch gekennzeichnet, dass** die Bauplattform (15) eine intrinsische Struktur (16) aufweist, wobei diese von Luft und/oder Lösungsmittel durchströmbar ist.

11. Vorrichtung nach einem der Ansprüche 7 bis 10, **dadurch gekennzeichnet, dass** die keramische Paste (7) vorzugsweise aus Silikatkeramiken besteht und/oder dass den Silikatkeramiken Glaspulver und/oder technische Keramiken beigemengt sind.

## Claims

1. Method for manufacturing a component using 3D multi-material printing, in particular for manufacturing an electrical component, wherein mixed metallic and ceramic pastes (7) are applied in layers by means of an extrusion nozzle from powder (2) and binder using an extrusion process and are brought into shape, and after the component has been printed, a sintering process takes place, wherein the printing process is monitored by means of a monitoring device in such a way that defects in the print are detected and localized by means of a camera and compared with the measurements of continuous monitoring, wherein new extrusion paths are automatically created based on detected defects, which automatically correct the defects and the overfilling or underfilling of each printed layer is monitored in relation to the extrusion quantity by means of a camera, wherein the filling degree of each printed layer is recorded and evaluated during the printing process with the aid of imaging methods, and a bead deposited on the printed body during the printing process is assessed with the aid of the camera and image recognition and evaluation methods, **characterized in that**, in the event of defects, these are corrected before the next layer is applied and **in that** printing of the following layer is only continued after the defects have been corrected, and when a defect is detected, its location and extent are identified and stored, and based on the detected defects, new extrusion paths are automatically created, thereby correcting the defects in a fully automatic manner.

2. Method according to claim 1, **characterized in that** the binder consists of an emulsion of several components, wherein the binder consists of polymers of different chain lengths, ring-shaped hydrocarbon compounds, iso-paraffins, olefins, n-paraffins, polysaccharides, surface-active substances or defoamers, or a combination of at least two of these components, and the binder parameters are adjusted by means of the emulsion.

3. Method according to claim 1 or 2, **characterized in that** after the component has been printed, a sintering process of the printed parts is carried out, wherein the temperature level and the sintering atmosphere are selected such that the binder components are expelled from the component by means of oxidation, wherein the temperature is subsequently increased to 900-1500°C, whereby the oxidized metallic components of the printed component are reduced with the aid of active gases.

4. Method according to one of claims 1 to 3, **characterized in that** the metallic and ceramic paste (7) is mixed under vacuum by means of an automatic mixing and feeding device and fed to the print head by means of gravity and vibration.

5. Method according to claim 4, **characterized in that** the mixing and feeding device has an inlet opening, wherein the quantity provided for mixing is determined from the amplitude, frequency, powder properties, and diameter of the inlet opening.

6. Method according to one of claims 1 to 5, **characterized in that** the shrinkage value during drying and the sintering process, as well as the physical properties of the printed body, are adjusted by adding additives to the ceramic paste.

7. Device for manufacturing a component by means of 3D multi-material printing, wherein mixed metallic and ceramic pastes (7) are applied in layers by means of an extrusion nozzle from powder (2) and binder using an extrusion process and can be brought into shape, comprising a monitoring device for carrying out the method according to one of claims 1 to 6, **characterized in that** the monitoring device
o comprises a camera that detects and localizes defects in the print and compares them with the measurements of continuous monitoring,
and
o comprises a camera that monitors overfilling or underfilling of each printed layer in relation to the extrusion quantity, and the degree of filling of each printed layer can be detected and evaluated during the printing process using an imaging method.

8. Device according to claim 7, **characterized in that** the device has a build platform (15) and the build platform (15) is designed in the form of a ceramic build platform, wherein the build platform (15) has a porous structure such that moisture can be specifically supplied to or extracted from the component.

9. Device according to claim 7, **characterized in that** the monitoring device has means for monitoring a pressure for detecting temporary blockages in the area of the extrusion nozzle and **in that** the blockage outside the printed body can be removed by increasing the pressure and the printing process can be continued.

10. Device according to one of claims 7 to 9, **characterized in that** the build platform (15) has an intrinsic structure (16) through which air and/or solvent can flow.

11. Device according to one of claims 7 to 10, **characterized in that** the ceramic paste (7) preferably consists of silicate ceramics and/or **in that** glass powder and/or technical ceramics are added to the silicate ceramics.

## Revendications

1. Procédé pour la fabrication d'une pièce par impression 3D multimatériaux, en particulier pour la fabrication d'un composant électrique, dans lequel des pâtes (7) métalliques et céramiques mélangées à partir de poudre (2) et de liant sont appliquées par couches et mises en forme au moyen d'une buse d'extrusion pour créer la pièce au moyen d'un procédé d'extrusion et la pièce est frittée après son impression, dans lequel le processus d'impression est surveillé au moyen d'une installation de surveillance de telle façon que des défauts de l'impression sont reconnus au moyen d'une caméra, localisés et comparés avec les mesures d'une surveillance continue, dans lequel de nouveaux trajets d'extrusion sont créés automatiquement sur la base des défauts reconnus pour corriger les défauts de façon entièrement automatique et un excédent ou une insuffisance de chaque couche imprimée en termes de quantité d'extrusion est surveillée au moyen d'une caméra, dans lequel le niveau de remplissage de chaque couche imprimée est acquis et analysé pendant le processus d'impression avec l'aide de procédés d'imagerie et un bourrelet déposé sur la pièce imprimée pendant l'opération d'impression est évalué à l'aide de la caméra et de procédés de reconnaissance et d'analyse d'images, **caractérisé en ce que**, en cas de défauts, ceux-ci sont corrigés avant la couche suivante et **en ce que** l'impression de la couche suivante ne se poursuit qu'après la correction des défauts et, si un défaut est reconnu, sa localisation et son étendue sont reconnues et enregistrées et de nouveaux trajets d'extrusion sont ensuite créés automatiquement sur la base de défauts reconnus et les défauts sont ainsi corrigés de façon entièrement automatique.

2. Procédé selon la revendication 1, **caractérisé en ce que** le liant se compose d'une émulsion de plusieurs composants, le liant étant composé de polymères de différentes longueurs de chaînes, d'hydrocarbures cycliques, d'isoparaffines, d'oléfines, de n-paraffines, de polysaccharides, de substances tensioactives ou antimousse ou d'une combinaison d'au moins deux de ces composants et les paramètres du liant étant ajustés au moyen de l'émulsion.

3. Procédé selon la revendication 1 ou 2, **caractérisé en ce que** les pièces imprimées sont frittées après l'impression, le niveau de température et l'atmosphère de frittage étant choisis de telle façon que les fractions de liant soient chassées de la pièce par oxydation, la température étant ensuite augmentée entre 900 et 1500 °C, de sorte que les composants métalliques de la pièce imprimée soient réduits à l'aide de gaz actifs.

4. Procédé selon l'une des revendications 1 à 3, **caractérisé en ce que** la pâte métallique et céramique (7) est mélangée sous vide au moyen d'une installation automatique de mélange et d'alimentation et amenée à la tête d'impression au moyen de la gravité et de vibrations.

5. Procédé selon la revendication 4, **caractérisé en ce que** l'installation de mélange et d'alimentation comporte une ouverture d'entrée, la quantité fournie pour le mélange étant déterminée à partir de l'amplitude, de la fréquence, de la texture de la poudre et du diamètre de l'ouverture d'entrée.

6. Procédé selon l'une des revendications 1 à 5, **caractérisé en ce que** le taux de retrait pendant le séchage et le frittage et les propriétés physiques de la pièce imprimée sont ajustées au moyen de l'ajout d'additifs dans la pâte céramique.

7. Dispositif pour la fabrication d'une pièce au moyen d'une impression 3D multimatériaux, dans lequel des pâtes (7) métalliques et céramiques mélangées à partir de poudre (2) et de liant peuvent être appliquées par couches et mises en forme au moyen d'une buse d'extrusion pour créer la pièce au moyen d'un procédé d'extrusion, comprenant une installation de surveillance pour la mise en œuvre du procédé selon l'une des revendications 1 à 6, **caractérisé en ce que** l'installation de surveillance
o comporte une caméra qui reconnaît les défauts d'impression, les localise et les compare aux mesures d'une surveillance continue et
o comporte une caméra qui surveille un excédent ou une insuffisance de chaque couche imprimée en termes de quantité d'extrusion et le niveau de remplissage de chaque couche imprimée peut être acquis et analysé pendant le processus d'impression avec un procédé d'imagerie.

8. Dispositif selon la revendication 7, **caractérisé en ce qu'**il comporte une plate-forme de construction (15) et la plate-forme de construction (15) est conçue sous la forme d'une plate-forme de construction en céramique, laquelle plate-forme de construction (15) présente une structure poreuse de sorte que de l'humidité peut être amenée à la pièce ou extraite de celle-ci sélectivement.

9. Dispositif selon la revendication 7, **caractérisé en ce que** l'installation de surveillance comporte des moyens pour surveiller une impression et reconnaître des colmatages temporaires de la buse d'extrusion et **en ce que** le colmatage peut être défait à l'extérieur de la pièce imprimée par une élévation de la pression avant que le processus d'impression puisse continuer.

10. Dispositif selon l'une des revendications 7 à 9, **caractérisé en ce que** la plate-forme de construction (15) présente une structure intrinsèque (16) qui peut être parcourue par de l'air et/ou par des solvants.

11. Dispositif selon l'une des revendications 7 à 10, **caractérisé en ce que** la pâte céramique (7) se compose de préférence de céramiques à base de silicate et/ou **en ce que** des poudres de verre et/ou des céramiques techniques sont mélangées aux céramiques à base de silicate.
